(19) Europäisches Patentamt
European Patent Office
Office européen des brevets

(11) EP 3 806 199 A1

(12) EUROPEAN PATENT APPLICATION
published in accordance with Art. 153(4) EPC

(43) Date of publication:
14.04.2021 Bulletin 2021/15

(51) Int Cl.:
H01M 4/133 (2010.01)     H01M 4/134 (2010.01)
H01M 4/36 (2006.01)      H01M 4/587 (2010.01)
H01M 4/66 (2006.01)      H01M 4/80 (2006.01)

(21) Application number: 19810089.3

(22) Date of filing: 09.05.2019

(86) International application number:
PCT/JP2019/018564

(87) International publication number:
WO 2019/230322 (05.12.2019 Gazette 2019/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.05.2018 JP 2018102180

(71) Applicants:
• HONDA MOTOR CO., LTD.
Minato-ku
Tokyo 107-8556 (JP)
• SUMITOMO ELECTRIC INDUSTRIES, LTD.
Osaka-shi, Osaka 541-0041 (JP)

(72) Inventors:
• TANAAMI, Kiyoshi
Wako-shi, Saitama 351-0193 (JP)

• TANAKA, Akihisa
Wako-shi, Saitama 351-0193 (JP)
• AOYAGI, Shintaro
Wako-shi, Saitama 351-0193 (JP)
• OKUNO, Kazuki
Osaka-shi, Osaka 541-0041 (JP)
• HOSOE, Akihisa
Osaka-shi, Osaka 541-0041 (JP)
• SENOO, Kikuo
Osaka-shi, Osaka 541-0041 (JP)
• TAKEBAYASHI, Hiroshi
Osaka-shi, Osaka 541-0041 (JP)

(74) Representative: Böhm, Brigitte
Weickmann & Weickmann
Patent- und Rechtsanwälte PartmbB
Postfach 860 820
81635 München (DE)

(54) NEGATIVE ELECTRODE FOR LITHIUM ION SECONDARY BATTERY

(57) Provided is a negative electrode for a lithium ion secondary battery capable of obtaining a lithium ion secondary battery having a high capacity and excellent charge-and-discharge cycle characteristics. A negative electrode for a lithium ion secondary battery (1) includes: a current collector (3) composed of a metal porous body having a three-dimensional network structure (2); and a negative electrode active material (4) held on the current collector (3). An overcoat layer (5) covering an outer surface of the current collector (3) is included, and the overcoat layer (5) includes hard carbon.

FIG.1

EP 3 806 199 A1

**Description**

Technical Field

The present invention relates to a negative electrode for a lithium ion secondary battery.

Background Art

Conventionally, a negative electrode for a lithium ion secondary battery that uses a metal porous body having continuous pores as a current collector and having a mixture including a negative electrode active material filled in the continuous ventilation holes of the metal porous body, wherein the negative electrode active material is one selected from the group consisting of carbon, tin, silicon, and lithium titanate has been known (for example, refer to Patent Literature 1).

In the above negative electrode for the lithium ion secondary battery, the above mixture is filled in the continuous ventilation holes and wrapped in the metal skeleton, thus being hardly left off, and therefore the amount of a binder in the mixture can be reduced to relatively increase the content ratio of the negative electrode active material, allowing the high capacity of the lithium ion secondary battery to be achieved.

Citation List

Patent Literature

Patent Literature 1: Japanese Patent Laid-Open No. 2012-256584

Summary of Invention

Technical Problem

However, in the negative electrode for the lithium ion secondary battery described in Patent Literature 1, a part of the above metal porous body may be exposed on the outer surface, and in this case, an internal short circuit of the lithium ion secondary battery easily occurs, leading a disadvantage that cell deterioration accelerates and charge-and-discharge cycle characteristics deteriorate.

In addition, using graphite as a negative electrode active material can increase the capacity, but Li precipitation (dendrite) easily occurs and an internal short circuit easily occurs, leading a disadvantage that the charge-and-discharge cycle characteristics deteriorate.

On the other hand, in order to suppress an internal short circuit, an oxide such as lithium titanate (LTO) is used as a negative electrode active material, leading to a disadvantage of reduction of the capacity.

The object of the present invention is to eliminate such inconvenience and to provide a negative electrode for a lithium ion secondary battery capable of obtaining a lithium ion secondary battery having a high capacity and excellent charge-and-discharge cycle characteristics.

Solution to Problem

In order to achieve such an object, a negative electrode for a lithium ion secondary battery of the present invention comprises: a current collector composed of a metal porous body having a three-dimensional network structure; and a negative electrode active material held on the current collector, and comprises an overcoat layer covering an outer surface of the current collector, and the overcoat layer comprises hard carbon.

According to the negative electrode for the lithium ion secondary battery of the present invention, the outer surface of the current collector is covered with the overcoat layer, and thereby the metal porous body is not exposed and an internal short circuit of the lithium ion secondary battery can be prevented.

In addition, graphite and the like used for the negative electrode active material has an Li precipitation area that is in a plateau form at a low potential in which Li easily precipitates, and hard carbon included in the overcoat layer has an Li precipitation area that is not in a plateau form at a low potential and thus can significantly suppress Li precipitation. As a result, the overcoat layer suppresses growth of dendrite due to Li precipitation and thus can prevent an internal short circuit of the lithium ion secondary battery.

Therefore, according to the negative electrode for the lithium ion secondary battery of the present invention, the lithium ion secondary battery having a high capacity and excellent charge-and-discharge cycle characteristics can be obtained by preventing an internal short circuit of the lithium ion secondary battery when a high-capacity active material such as graphite is also used as the negative electrode active material.

In the negative electrode for the lithium ion secondary battery of the present invention, the negative electrode active material is preferably at least one selected from the group consisting of artificial graphite, natural graphite, hard carbon, Si, and Si compounds. The negative electrode for the lithium ion secondary battery of the present invention certainly provides a high capacity of the lithium ion secondary battery by using any of the above negative electrode active materials, and can improve the durability of the charge-and-discharge cycle.

In addition, in the negative electrode for the lithium ion secondary battery of the present invention, the negative electrode active material is more preferably artificial graphite or natural graphite. The negative electrode for the lithium ion secondary battery of the present invention further certainly provides a high capacity of the lithium ion secondary battery by using any of artificial graphite or natural graphite as the negative electrode active material, and can further improve the durability of the charge-and-discharge cycle.

Brief Description of Drawings

FIG. 1 is an explanatory sectional view showing a configuration of a negative electrode for a lithium ion secondary battery of the present invention.

FIG. 2 is a graph showing energy density in a lithium ion secondary battery using a negative electrode for a lithium ion secondary battery according to an example of the present invention.

FIG. 3 is a graph showing output density in a lithium ion secondary battery using a negative electrode for a lithium ion secondary battery according to an example of the present invention.

FIG. 4 is a graph showing a change in capacity retention rate with respect to charge-and-discharge cycles of a lithium ion secondary battery using a negative electrode for a lithium ion secondary battery according to an example of the present invention.

FIG. 5 is a graph showing a change in change ratio of dQ/dV with respect to voltage of a lithium ion secondary battery using a negative electrode for a lithium ion secondary battery according to an example of the present invention.

Description of Embodiments

Hereinafter, embodiments of the present invention will be described in more detail with reference to the accompanying drawings.

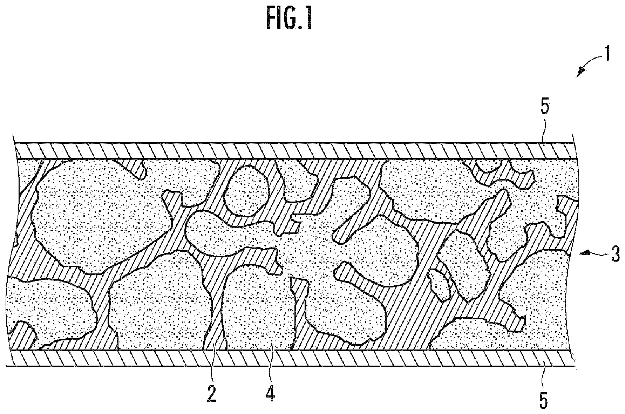

As shown in FIG. 1, a negative electrode for the lithium ion secondary battery 1 of the present embodiment comprises: a current collector 3 composed of a metal porous body having a three-dimensional network structure 2; a negative electrode active material 4 held on the above current collector 3; and an overcoat layer 5 covering an outer surface of the above current collector 3, wherein the above overcoat layer 5 comprises hard carbon.

As the above metal porous body constituting the above current collector 3, those that can be suitably used are made of a conductive metal such as nickel, copper, stainless steel, or titanium, and have a porosity of 90 to 98%, a number of pores (cells) of 46 to 50/inch, a pore diameter of 0.4 to 0.6 mm, a specific surface area of 4500 to 5500 $m^2/m^3$, and a thickness of 0.8 to 1.2 mm. The above metal porous body is preferably made of copper.

The above metal porous body made of copper can be produced by applying carbon paint to a urethane foam with open cells to perform a conductive treatment, forming a predetermined amount of copper layer by electroplating, thermally decomposing and removing the urethane foam and carbon paint, and reducing the oxidized copper layer under hydrogen gas atmosphere. As the metal porous body produced in this manner, "Celmet" (registered trademark) of copper or nickel, manufactured by Sumitomo Electric Industries, Ltd. can be used.

Suitable examples of the above negative electrode active material 4 include a high-capacity negative electrode active material consisting of at least one selected from the group consisting of, for example, artificial graphite, natural graphite, hard carbon, Si, and Si compounds, and any of artificial graphite or natural graphite is particularly suitable.

The overcoat layer 5 comprises hard carbon and preferably has a thickness in the range of 3 to 70 $\mu$m per side, for example. When the thickness of the overcoat layer 5 is less than 3 $\mu$m, the content of hard carbon is low, and the effect may not be obtained. In addition, when the thickness of the overcoat layer 5 is more than 70 $\mu$m, the content of hard carbon becomes excessive, and the energy density of the lithium ion secondary battery decreases.

A method for producing the negative electrode for the lithium ion secondary battery of the present embodiment will be described.

When the negative electrode for the lithium ion secondary battery 1 of the present embodiment is produced, a slurry for the negative electrode active material is prepared by mixing the above negative electrode active material 4, at least one selected from the group consisting of carboxymethyl cellulose, styrene-butadiene rubber, sodium polyacrylate, and polyvinylidene fluoride as a binder, and carbon black as a conductive aid in a mass ratio of negative electrode active material:binder:conductive aid = 80 to 99.5:0.5 to 20:0 to 10 so as to obtain a total amount of 100, and then by diluting with an organic solvent such as N-methylpyrrolidone or pure water.

The slurry for the overcoat layer is prepared by mixing hard carbon, at least one selected from the group consisting of carboxymethyl cellulose, styrene-butadiene rubber, sodium polyacrylate, and polyvinylidene fluoride as a binder, and carbon black as a conductive aid in a mass ratio of hard carbon:binder:conductive aid = 80 to 99:0.5 to 19.5:0 to 0.5 so as to obtain a total amount of 100, and then by diluting with organic solvent such as N-methylpyrrolidone or pure water.

Subsequently, the above slurry for the negative electrode active material is applied to one side of the current collector 3 composed of the above metal porous body by, for example, extruding from a nozzle at a predetermined pressure. The solvent of the above slurry for the negative electrode active material is dried and removed, and then the above slurry for the negative electrode active material is similarly applied to the other side of the current collector 3 composed of the above metal porous body, and the solvent of the slurry for the negative electrode active material is dried and removed again.

The above slurry for the overcoat layer is applied to both sides of the above current collector 3 to which the above slurry for the negative electrode active material has been applied, in the same manner as the slurry for the above negative active material.

The above current collector having the above slurry for the negative electrode active material and the above slurry for the overcoat layer applied thereto is dried in the atmosphere at a temperature in the range of 110 to 130°C for 11 to 13 hours, and is roll-pressed so as to obtain a predetermined density of each slurry. The negative electrode for the lithium ion secondary battery 1 of the present embodiment is obtained by drying in a vacuum at a temperature in the range of 110 to 130°C for 11 to 13 hours.

A lithium ion secondary battery can be configured by sandwiching a separator between the negative electrode for the lithium ion secondary battery 1 of the present embodiment and a positive electrode in a container, impregnating with an electrolytic solution, and sealing the container.

The above positive electrode that can be used is, for example, one holding a positive electrode active material in the current collector composed of the metal porous body having the above three-dimensional network structure. In this case, the above metal porous body is preferably made of aluminum. The above metal porous body can be produced by applying carbon paint to an urethane foam with open cells to perform a conductive treatment, using a plating bath including 1-ethyl-3-methylimidazolium chloride and aluminum chloride ($AlCl_3$) in a molar ratio of 33:67 and further including a small amount of phenanthroline to perform electroplating in an inert atmosphere to form a predetermined amount of aluminum layer, and thermally decomposing and removing the urethane foam and carbon paint under the condition where excessive oxidation of the aluminum surface is suppressed in an oxygen-containing atmosphere at a temperature in the range of 500 to 660°C. As the metal porous body produced in this manner, "Aluminum Celmet" (registered trademark), manufactured by Sumitomo Electric Industries, Ltd. can be used.

In addition, examples of the above positive electrode active material that can be used include at least one selected from the group consisting of, for example, $Li(Ni_{1/3}Co_{1/3}Mn_{1/3})O_2$, $Li(Ni_{1/6}Co_{4/6}Mn_{1/6})O_2$, $Li(Ni_{5/10}Co_{2/10}Mn_{3/10})O_2$, $Li(Ni_{6/10}Co_{2/10}Mn_{2/10})O_2$, $Li(Ni_{8/10}Co_{1/10}Mn_{1/10})O_2$, and $Li(Ni_{0.8}Co_{0.15}Al_{0.05})O_2$.

When the above positive electrode is produced, a slurry for the positive electrode active material is prepared by mixing the above positive electrode active material, polyvinylidene fluoride (PVDF) as a binder, and carbon black as a conductive aid in the mass ratio of positive electrode active material:binder:conductive aid = 80 to 99:0.5 to 19.5:0.5 to 19.5 so as to obtain the total amount of 100, and then diluting with an organic solvent such as N-methylpyrrolidone.

The positive electrode is obtained in exactly the same manner as in the case of producing the above negative electrode, except that the above slurry for the positive electrode active material is used instead of the above slurry for the negative electrode active material and the above slurry for the overcoat layer is not used at all.

As the above separator, for example, a microporous polyethylene or polypropylene film can be used.

In addition, examples of the above electrolytic solution that can be used include those obtained by dissolving supporting salts such as $LiPF_6$, $LiBF_4$, $LiClO_4$ at a concentration in the range of 0.1 to 3 mol/L, preferably in the range of 0.6 to 1.5 mol/L in a solvent such as ethylene carbonate, propylene carbonate, dimethyl carbonate, diethyl carbonate, or ethyl methyl carbonate.

Example and Comparative Example of the present invention will be shown as follows.

Examples

[Example]

In the present Example, a negative electrode was prepared as follows by using those made of copper and having a porosity of 95%, a number of pores (cells) of 46 to 50/inch, a pore diameter of 0.5 mm, a specific surface area of 5000 $m^2/m^3$, a thickness of 1.0 mm, a length of 150 mm, and a width of 200 mm (Celmet (registered trademark) manufactured by Sumitomo Electric Industries, Ltd.) as a current collector composed of a metal porous body having a three-dimensional network structure in which columnar skeletons are three-dimensionally connected (hereinafter abbreviated as "three-dimensional skeleton current collector").

A slurry for the negative electrode active material was prepared by mixing natural graphite as a negative electrode active material, a mixture of carboxymethyl cellulose and styrene-butadiene rubber as a binder, and carbon black as a conductive aid in the mass ratio of negative electrode active material:binder:conductive aid = 96.5:2.5:1, and then diluting with pure water.

The above slurry for the negative electrode active material was applied to an area of 80 mm in length and 150 mm in width at the center of one side of the above three-dimensional skeleton current collector, and dried in the atmosphere at a temperature of 100°C for 30 minutes. The above slurry for the negative electrode active material was applied to an area corresponding to the area to which the above slurry for the negative electrode active material was applied on the other side of the above three-dimensional skeleton current collector, and further dried in the atmosphere at a temperature of 100°C for 30 minutes.

Hard carbon and polyvinylidene fluoride as a binder was mixed in the mass ratio of hard carbon:binder = 98:2, and then diluted with N-methylpyrrolidone to prepare a slurry for the overcoat layer.

The above slurry for the overcoat layer was applied to areas to which the above slurry for the negative electrode active material was applied in both sides of the above three-dimensional skeleton current collector having the above slurry for the negative electrode active material applied thereto.

The above three-dimensional skeleton current collector having the above slurry for the negative electrode active material and the above slurry for the overcoat layer applied thereto was dried in the atmosphere at a temperature of 120°C for 12 hours, roll-pressed, and further dried in vacuum at a temperature of 120°C for 12 hours.

The negative electrode was obtained by punching into a shape having: a coating area of 34 mm in length and 44 mm in width having the above slurry for the negative electrode active material and the above slurry for the overcoat layer applied thereto; and a tab of 15 mm in length and 30 mm in width not having the above slurry for the negative electrode active material and the above slurry for the overcoat layer applied thereto, in contact with the coating area. The above negative electrode comprises a 230 $\mu$m-thick negative electrode active material layer held on the above three-dimensional skeleton current collector, and each of 30 $\mu$m-thick overcoat layers formed on both sides thereof.

The positive electrode was prepared as follows by using those made of aluminum and having a porosity of 95%, a number of pores (cells) of 46 to 50/inch, a pore diameter of 0.5 mm, a specific surface area of 5000 $m^2/m^3$, a thickness of 1.0 mm, a length of 150 mm, and a width of 200 mm (Aluminum Celmet (registered trademark) manufactured by Sumitomo Electric Industries, Ltd.) as the above three-dimensional skeleton current collector.

The slurry for the positive electrode active material was prepared by mixing $Li(Ni_{5/10}Co_{2/10}Mn_{3/10})O_2$ as a positive electrode active material, polyvinylidene fluoride as a binder, and carbon black as a conductive aid in the mass ratio of positive electrode active material:binder:conductive aid = 94:2:4, and then by diluting with N-methylpyrrolidone.

The above slurry for the positive electrode active material was applied to an area of 80 mm in length and 150 mm in width at the center of one side of the above three-dimensional skeleton current collector, and dried in the atmosphere at a temperature of 100°C for 30 minutes. The above slurry for the positive electrode active material was applied to an area corresponding to the area to which the above slurry for the positive electrode active material was applied on the other side of the above three-dimensional skeleton current collector, and further dried in the atmosphere at a temperature of 100°C for 30 minutes.

The above three-dimensional skeleton current collector having the above slurry for the positive electrode active material applied thereto was dried in the atmosphere at a temperature of 120°C for 12 hours, roll-pressed, and further dried in vacuum at a temperature of 120°C for 12 hours.

The positive electrode was obtained by punching into a shape having: a coating area of 30 mm in length and 40 mm in width having the above slurry for the positive electrode active material applied thereto; and a tab of 15 mm in length and 30 mm in width not having the above slurry for the negative electrode active material and the above slurry for the overcoat layer applied thereto, in contact with the coating area. The above positive electrode comprises a 380-$\mu$m-thick positive electrode active material layer held on the above three-dimensional skeleton current collector.

In the pouch of aluminum laminate, the above positive electrode and the above negative electrode were provided such that the separator was sandwiched therebetween and the tab was exposed outside the pouch. A lithium ion secondary battery was produced by impregnating with an electrolytic solution and then vacuum-sealing.

As the above separator, a microporous polyethylene film having a thickness of 15 $\mu$m was used. In addition, as the above electrolytic solution, used were those obtained by dissolving $LiPF_6$ as a supporting salt at a concentration of 1.2 mol/L in a mixed solvent that had been mixed with ethylene carbonate, dimethyl carbonate, and diethyl carbonate in a volume ratio of 40:30:30.

For the lithium ion secondary battery produced in the present Example, the temporary capacity of the positive electrode at a temperature of 25°C was calculated from the amounts of the active materials of the positive electrode active material. Based on the above temporary capacity, a current value capable of discharging in 5 hours (0.2 C) was determined.

The lithium ion secondary battery produced in the present Example was subjected to constant current charging at 0.2 C to 4.2 V, constant voltage charging at 4.2 V for 1 hour, and then constant current discharging to 2.4 V at 0.2 C. While the capacity at the above constant current discharge was regarded as the rated capacity (mAh/g), an average voltage (V) was defined as a voltage when the capacity was 1/2 of the rated capacity in the charge-and-discharge curve during the constant current discharge, and the energy density (Wh/g) was calculated from the following equation (1).

$$\text{Energy density (Wh/g)} = \text{Rated capacity (mAh/g)} \times \text{Average voltage (V)} \qquad (1)$$

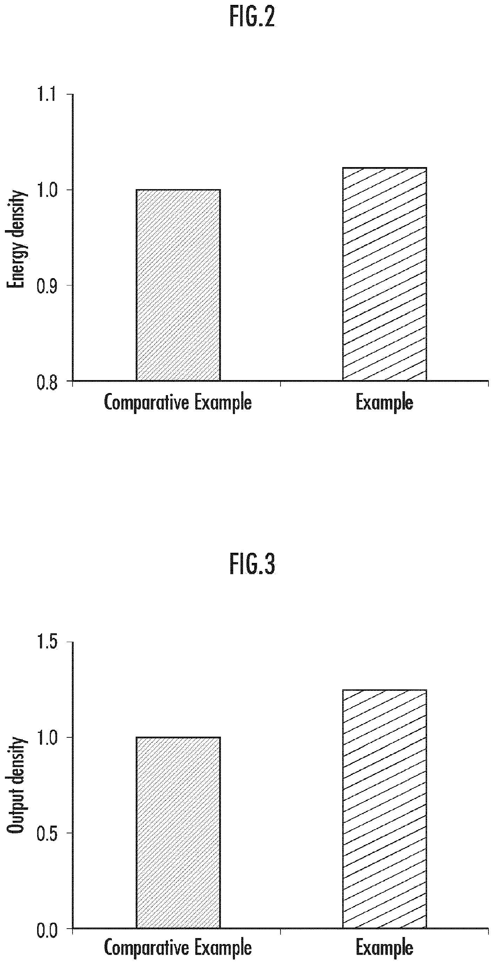

The results are shown in FIG. 2. In FIG. 2, the energy density (Wh/g) in the lithium ion secondary battery of Comparative Example described below is set to 1 and the ratio value respective to this is shown.

In order to obtain a capacity having a charging rate (SOC) of 50% with respect to the above rated current at a temperature of 25°C, charging was performed at 0.2 C for 2.5 hours, and the open circuit voltage (OCV) at this time was defined as Eo.

Discharging was performed at a predetermined current value for 10 seconds while measuring the voltage, and then the discharge capacity was charged at 0.2 C, and such operation was repeated with changing the predetermined current value from 0.5 C to 3.0 C by 0.5 C. The current value was plotted on the horizontal axis and the voltage for each current value was plotted on the vertical axis, and the slope of the straight line obtained was the resistance R.

The cutoff voltage $E_{cutoff}$ was set to 2.4 V, and the above resistance R and the above open circuit voltage Eo were used to calculate the output density (W) from the following equation (2).

$$W = (|E_{cutoff} - E_0|/R) \times E_{cutoff} \qquad (2)$$

The results are shown in FIG. 3. In FIG. 3, the output density in the lithium ion secondary battery of Comparative Example described below is set to 1 and the ratio value respective to this is shown.

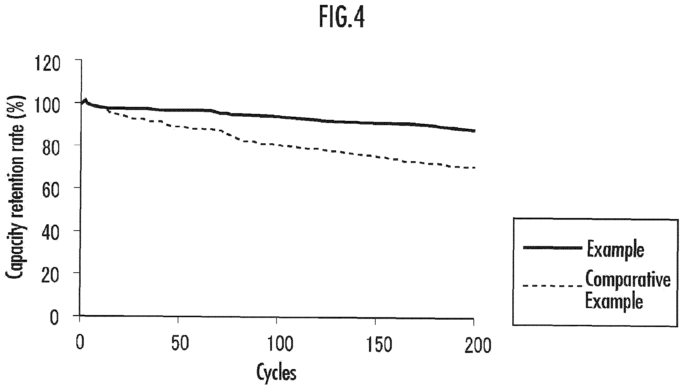

For the lithium ion secondary battery 1 produced in the present Example, the operation of constant current charging at 0.5 C to 4.2 V and constant current discharging to 2.4 V at 0.5 C at a temperature of -10°C was regarded as one cycle, and the operation was repeated for 200 cycles. FIG. 4 shows changes in the capacity retention rate with respect to the number of cycles.

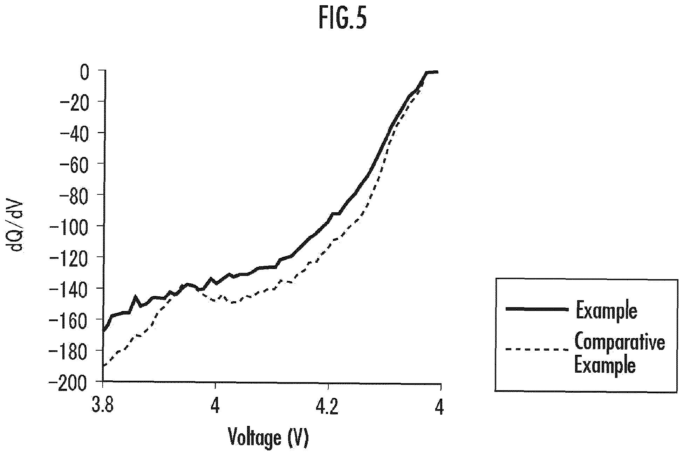

In the discharge curve of the 200th cycle in the above operation, the differential value of the capacity with respect to the voltage, dQ/dV, was calculated, and the change of dQ/dV with respect to the voltage was determined. The results are shown in FIG. 5.

[Comparative Example]

In the present Comparative Example, a negative electrode for a lithium ion secondary battery was prepared in exactly the same manner as in the above Example except that the overcoat layer was not formed at all. In addition, the lithium ion secondary battery was prepared in exactly the same manner as in the above Example except that the negative electrode for the lithium ion secondary battery obtained in the present Comparative Example was used.

The energy density (Wh/g) and the output density (W) were calculated in exactly the same manner as in the above Example except that the lithium ion secondary battery obtained in the present Comparative Example was used, and the change in the capacity retention rate with respect to the number of cycles and the change in dQ/dV with respect to the voltage were determined.

The energy density (Wh/g) is shown in FIG. 2, the output density (W) in FIG. 3, the change in the capacity retention rate with respect to the number of cycles in FIG. 4, and the change in dQ/dV with respect to the voltage in FIG. 5, respectively.

According to the lithium ion secondary battery of the above Example, it is clear that the energy density (Wh/g) is improved from FIG. 2 and the output density (W) is improved from FIG. 3 as compared with the lithium ion secondary battery of the above Comparative Example. Therefore, according to the lithium ion secondary battery of the above Example, it is clear that the capacity is higher than that of the lithium ion secondary battery of the above Comparative Example.

In addition, according to the lithium ion secondary battery of the above Example, it is clear that the durability is improved from FIG. 4 and the amount of lithium precipitated during the cycle is suppressed from FIG. 5 as compared with the lithium ion secondary battery of the above Comparative Example. Therefore, according to the lithium ion secondary battery of the above Example, it is clear that the charge-and-discharge cycle is superior to that of the lithium ion secondary battery of the above Comparative Example.

In addition,

Reference Signs List

None

**Claims**

1. A negative electrode for a lithium ion secondary battery comprising:

   a current collector composed of a metal porous body having a three-dimensional network structure; and
   a negative electrode active material held on the current collector,

   wherein the negative electrode comprises an overcoat layer covering an outer surface of the current collector, and the overcoat layer comprises hard carbon.

2. The negative electrode for the lithium ion secondary battery according to claim 1, wherein the negative electrode active material is at least one selected from the group consisting of artificial graphite, natural graphite, hard carbon, Si, and Si compounds.

3. The negative electrode for the lithium ion secondary battery according to claim 2, wherein the negative electrode active material is any one of artificial graphite or natural graphite.

FIG.1

# FIG.2

# FIG.3

# FIG.4

# FIG.5

## INTERNATIONAL SEARCH REPORT

| International application No. |
| --- |
| PCT/JP2019/018564 |

**A. CLASSIFICATION OF SUBJECT MATTER**
Int.Cl. H01M4/133(2010.01)i, H01M4/134(2010.01)i, H01M4/36(2006.01)i, H01M4/587(2010.01)i, H01M4/66(2006.01)i, H01M4/80(2006.01)i

According to International Patent Classification (IPC) or to both national classification and IPC

**B. FIELDS SEARCHED**

Minimum documentation searched (classification system followed by classification symbols)
Int.Cl. H01M4/133, H01M4/134, H01M4/36, H01M4/587, H01M4/66, H01M4/80

Documentation searched other than minimum documentation to the extent that such documents are included in the fields searched
Published examined utility model applications of Japan    1922-1996
Published unexamined utility model applications of Japan    1971-2019
Registered utility model specifications of Japan    1996-2019
Published registered utility model applications of Japan    1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2015-153700 A (SUMITOMO ELECTRIC INDUSTRIES, LTD.) 24 August 2015, claims 1-5, examples (Family: none) | 1-3 |
| Y | JP 2008-59999 A (SONY CORPORATION) 13 March 2008, claim 1, paragraphs [0068], [0069] & US 2008/0057401 A1, claim 1, paragraphs [0073], [0074] & KR 10-2008-0020961 A & CN 101202338 A | 1-3 |
| A | JP 2015-153531 A (SUMITOMO ELECTRIC INDUSTRIES, LTD.) 24 August 2015, claims 1-3, paragraphs [0056], [0057], examples (Family: none) | 1-3 |

☒   Further documents are listed in the continuation of Box C.     ☐   See patent family annex.

| *   Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 30.07.2019 | 06.08.2019 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2019/018564

C (Continuation).   DOCUMENTS CONSIDERED TO BE RELEVANT

| Category* | Citation of document, with indication, where appropriate, of the relevant passages | Relevant to claim No. |
|---|---|---|
| A | JP 4-280083 A (SONY CORPORATION) 06 October 1992, paragraphs [0007]-[0015] (Family: none) | 1-3 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012256584 A